# EUROPEAN PATENT SPECIFICATION

(11) **EP 0 343 652 B1**
(45) Date of publication and mention of the grant of the patent: **21.07.1993**
(21) Application number: 89109419.5
(22) Date of filing: 24.05.1989
(51) Int. Cl.: F02M 31/12

(54) **Internal combustion engine of the injection type, and plate intended for fitting between the inlet ports of a cylinder block of such an engine and an inlet tube**
Brennkraftmaschine mit Brennstoffeinspritzung und Platte, die zwischen den Einlassöffnungen dieser Maschine und einem Einlassrohr montiert wird
Moteur à combustion interne du type à injection et plaque installée entre les orifices d'admission du bloc-cylindres de ce moteur et un conduit d'admission

(30) Priority: 24.05.1988 NL 8801334
(43) Date of publication of application: 29.11.1989
(73) Proprietor: TEXAS INSTRUMENTS HOLLAND B.V., 7602 EM Almelo (NL); DAIMLER-BENZ AKTIENGESELLSCHAFT, 70327 Stuttgart (DE)
(72) Inventor: van Wechem, G.L., NL-7462 ES Rijssen (NL); van der Ploeg, A., NL-7642 VA Wierden (NL); Beunk, G.J., NL-7604 HH Almelo (NL); Henke, Jürgen, D-7314 Wernau (DE); Spinner, Erwin, D-7022 Leinfelden-E1 (DE); Früh, Peter, D-7056 Weinstadt-2 (DE)
(74) Representative: Leiser, Gottfried, Dipl.-Ing.

(56) References cited:
- EP-A- 0 234 052
- DE-A- 3 247 978
- DE-C- 3 426 469
- US-A- 3 760 780
- US-A- 4 387 291

## Description

The invention relates to an internal-combustion engine of the injection type, comprising two or more cylinders and a cylinder head having, for each cylinder, an inlet channel with inlet valve, on which inlet channel an inlet tube with fuel injector is fixed, a heating element for each inlet channel (4) being mounted in thermally conducting connection with the cylinder head by means of a plate which is clamped between the inlet tube and the cylinder head so that each heating element projects into one inlet channel, the heating element having a heat sink, electrical resistance means disposed thereon, and current supply means.

Such an internal-combustion engine is known from DE-C-34 26 469.

It was found that about 50 % of the total exhaust gas emission, measured in an official emission test cycle (for example, ECE 15 or FTP test), was formed in the short period during which the engine had not yet reached its operating temperature. Even exhaust gas catalytic converters, which in normal circumstances reduce the exhaust gas emission by about 90 %, do not achieve this degree of conversion until the operating temperature of the catalytic converter is reached. The conversion starts at a temperature of about 300°C, so that after a cold start the exhaust gas emission from the engine is reduced little, if at all. Since petrol consists of a mixture of hydrocarbons with a boiling range of about 30°C to about 200°C and with a cold engine the temperature level is not high enough to vaporize the fuel, an additional quantity of fuel must be fed in when the engine is cold, in order to obtain a combustible mixture. This leads to a high exhaust gas emission. At a low engine temperature both petrol consumption and the exhaust gas emission are therefore relatively high.

By heating the petrol when the engine is cold a considerable contribution is therefore made to the improvement of the environment, and an appreciable fuel saving is also achieved, since little or no additional fuel has to be injected.

In the internal-combustion engine mentioned in the preamble the petrol is sprayed on the heating element and is thereby heated to the desired temperature. The petrol will consequently vaporize better, and a better mix with the combustion air is also achieved. The heating element is switched off when the engine is warm enough to take over the vaporization of the petrol.

In the engine known from DE-C-34 26 469 each heating element is a cylindrical or conical hollow body, which is formed of electrical resistance material or consists of a material of good thermal conductivity in which electrical resistance means, such as PTC tablets, are embedded. The plate which is clamped between the inlet tube and the cylinder head is a flange provided on the hollow body of each heating element which flange is received in a recess formed in the cylinder head. Thus, each heating element is provided with its own plate, and for the mounting of the heating element a special recess has to be provided in the cylinder head. Additional changes have to be made to the cylinder head for accommodating the electrical current conductors leading to the resistance means. Such measures have to be taken for each cylinder separately. This makes it difficult to add the heating elements subsequently to existing engines. Moreover, the resistance means are exposed to rough conditions in the inlet channel.

US-A-3 760 780 discloses electric heating means for fuel vaporization in internal combustion engines comprising two heating elements mounted in a common plate. The internal combustion engine, however, is not of the injection type, and the plate is not clamped between the inlet tubes of a plurality of cylinders and the cylinder head, but between a two-barrel carburetor and an intake manifold, each heating element being of tubular shape and mounted essentially parallel to the common plate so that it extends across one of the two carburetor passages. For multiple cylinder internal combustion engines of the injection type, US-A-3 760 780 proposes a different arrangement in which the inlet tube for each cylinder is provided with an internally threaded opening into which an externally threaded sleeve of the tubular heating element is threaded so that the heating element extends across the passage of the inlet tube between the fuel injector and the intake valve. For mounting the heating elements, threaded openings must be provided in the inlet tubes for all cylinders, and the individual heating elements must be separately mounted in these openings and connected by external cables to a current supply terminal.

The object of the invention is to provide an internal-combustion engine of the type indicated in the preamble which does not require special provisions in the cylinder head for the mounting of the heating elements in which the heating elements for a plurality of cylinders can be mounted and connected simultaneously in a simple and expedient manner, and in which the resistance means and their contacts and connections are well protected.

According to the invention, this object is achieved in that the heating elements of all cylinders are integrated in a common plate which is clamped between the inlet tubes of all cylinders and the cylinder head, that the electrical resistance means of each heating element is provided in a chamber whose top face, on which fuel is sprayed by the injector, forms part of the heat sink, and that the electrical resistance means of all heating elements are connected to a single connector pin via insulated current conductors embedded in the common plate.

The invention permits a very easy and simple mounting of a plurality of heating elements on existing multiple cylinder internal-combustion engines whithout any changes to the cylinder head or the inlet tubes. By simply clamping the common plate between the cylinder head and the inlet tubes, the heating elements and their electrical connections are fitted simultaneously to all cylinders. The common plate provides for an excellent heat-conducting connection between the cylinder head and the heating elements, which is important when the engine is warm and the heating elements are switched off. Due to the fact that the electrical resistance means and their relatively fragile contacts are fitted in an enclosed chamber, the danger of damage is minimized. The contacts remain clean and in this way ensure a reliable electrical connection. If the electrical resistance means were to become detached from the heat sink, they could not fall into the engine. If PTC material is used as the resistance material, the chosen design means that ageing of the PTC tablets is minimized.

The invention will now be explained in greater detail with reference to the figures, which show an example of an embodiment.
- Fig. 1: shows a schematic cross section of the top part of a cylinder of a direct injection internal-combustion engine according to the invention.

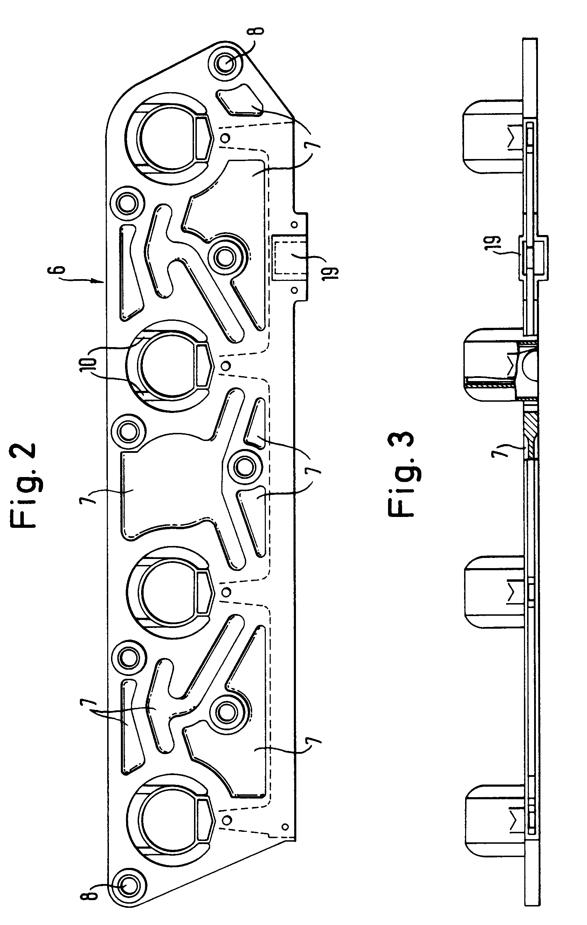

- Fig. 2: shows a top view of the plate used.
- Fig. 3: shows a front view of said plate.

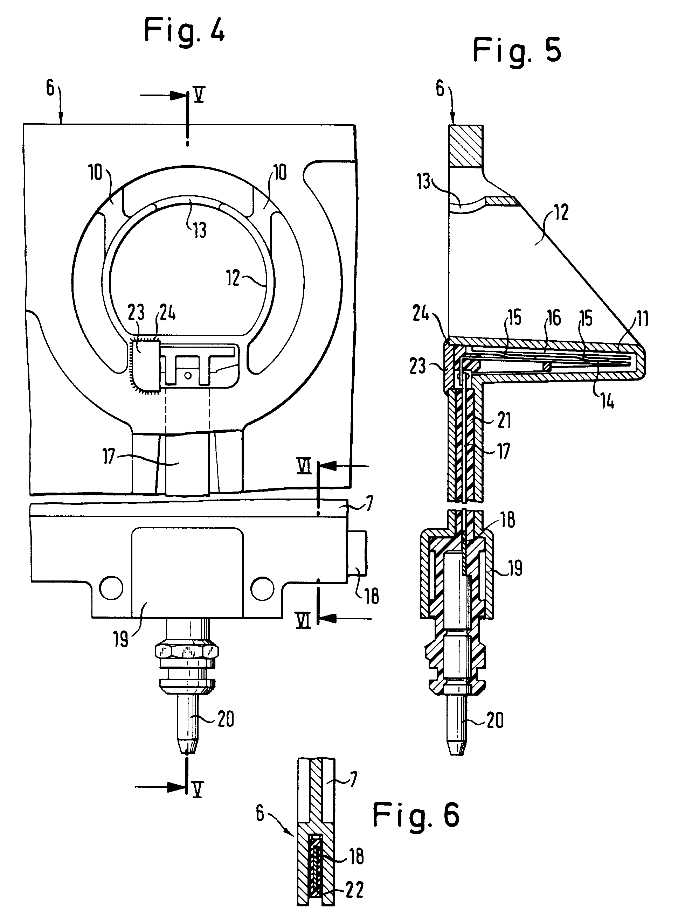

- Fig. 4: shows a part of the top view shown in Fig. 2, on a larger scale, and with a current supply connector pin (part of the cover of a chamber is imagined cut away).
- Fig. 5: shows a cross section along the line V-V in Fig. 4.
- Fig. 6: shows a cross section along the line VI-VI in Fig. 4.

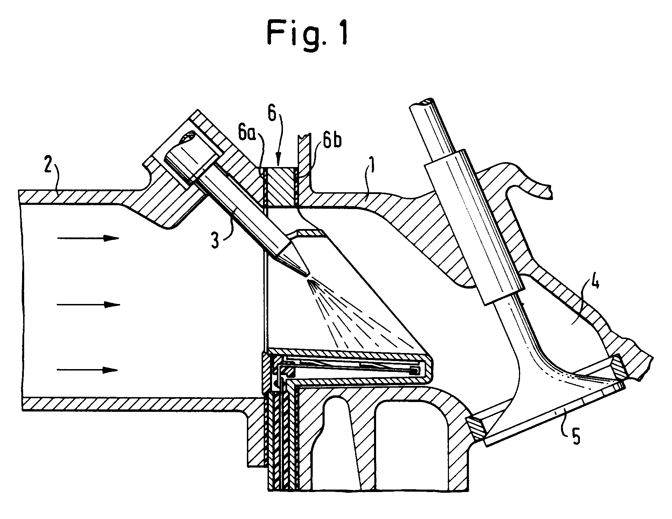

The top part of an internal-combustion engine shown in Fig. 1 has a cylinder head 1, on which an inlet tube 2 with fuel injector 3 is fixed. Inlet tube 2 opens out into an inlet channel 4 of the cylinder head. The inlet valve 5 is located in that channel.

A plate 6 of heat-conducting material, for example an aluminium alloy, is clamped between the inlet tube 2 and the cylinder head 1. In the case shown in the drawing this plate is common to four cylinders.

In order to pronounce the sealing faces and save material, recesses 7 are disposed in the plate and fixing holes 8 are also cut out in the plate.

At each inlet channel 4 the plate is provided with an aperture, and into each of said apertures a chamber 11 projects, which is at right angle to the surface of the plate, and a cylindrical surface 12 the width of which is at its maximum at the connection to the chamber 11 and at its minimum diagonally opposite. The cylindrical surface part of the lowest width is provided with a recess 13, through which the fuel injector projects. The top face of the chamber 11 and the cylindrical surface 12 form a heat sink.

A PTC tablet 16 is provided in each chamber 11, being fixed to the upper wall of the chamber 11 by means of a heat and electricity conducting epoxy resin. Each chamber also contains a contact spring 15 which is insulated from the heat sink by means of plastic.

Each contact spring 15 is connected, by means of a conductor strip 14, a conductor strip 17 connected thereto by laser welding and a conductor strip 18 integral therewith, to a connector pin 20 which projects into a junction box 19. The strips 17 and 18 are disposed in an insulating encasement 21 and 22 respectively. These encasements are embedded in internal cavities of the packing material. The strip 18 is soldered to the pin 20.

The chambers 11 are closed by a cover 23 fixed by laser welds 24. The combination of plate 6 and heating elements connected thereto by conducting material bridges 10 is placed between inlet tube 2 and inlet port of the cylinder head 1, a gasket 6b of heat-conducting material such as an aluminium alloy being added at the cylinder head side, and a gasket 6a of insulating material such as paper being added at the inlet tube side. When the engine is cold, effective heating of the injected fuel is achieved. This fuel is sprayed at various angles onto the top face of the chambers 11 belonging to the heat sinks. When current is supplied via the pin 20, the current conductors 18, 17 and 14 and the contact springs 15, the tablets will be heated to a temperature value determined by the PTC material, and this heat will be passed on to the top face of the chambers 11.

Air is drawn into the inlet tube 2 in the direction of the arrows (Fig. 1). A streamlining element can be fitted on the cover 23 of each chamber. Apart from such a cover, the PTC tablet in each chamber can also be shut off from the environment in a different way, for example by filling powder or epoxy resin. The interior of each chamber 11 is in connection with the atmosphere via the slit-type space in which the current conductors 17 and 18 are placed. This benefits the service life of the PTC tablets.

The injected fuel comes into good contact with the heating element because it is directed by the fuel injector 3 towards the heat sink 11, where the PTC tablet 16 is fitted on the spot, and also because through atomization of the fuel contact takes place with the cylindrically curved wall 12 which is connected by means of the material bridges 10 to the plate 6. The heat flow from and to the cylinder head 1 can be influenced by altering the dimensions of these material bridges 10. All this is selected in such a way that the most heat, the highest temperature level and the best heat transfer are achieved on the face where the atomized fuel flow comes into contact with the heat sink.

## Claims

1. Internal-combustion engine of the injection type, comprising two or more cylinders and a cylinder head (1) having, for each cylinder, an inlet channel (4) with an inlet valve (5), on which inlet channel an inlet tube (2) with a fuel injector (3) is fixed, a heating element for each inlet channel (4) being mounted in thermally conducting connection with the cylinder head (1) by means of a plate which is clamped between the inlet tube (2) and the cylinder head (1) so that each heating element projects into one inlet channel (4), the heating element having a heat sink (11, 12), electrical resistance means (16) disposed thereon, and current supply means (14, 17, 18, 20), characterized in that the heating elements (11 to 16) of all cylinders are integrated in a common plate (6) which is clamped between the inlet tubes (2) of all cylinders and the cylinder head (1), that the electrical resistance means (16) of each heating element (11 to 16) is provided in a chamber (11) whose top face, on which fuel is sprayed by the injector (3), forms part of the heat sink, and that the electrical resistance means (16) of all heating elements are connected to a single connector pin (20) via insulated current conductors (17, 18) embedded in the common plate (6).

2. Internal-combustion engine according to claim 1, characterized in that each heating element (11 to 16) comprises a cylindrically curved wall (12) connected to the chamber (11), the cylindrically curved wall (12) being connected to the plate (6) by means of material bridges (10) and forming part of the heat sink.

3. Internal-combustion engine according to any one of the preceding claims, characterized in that the electrical resistance means (16) are tablets of PTC material.

4. Internal-combustion engine according to any one of the preceding claims, characterized in that the plate (6) is made from a material of good thermal conductivity.

5. Internal-combustion engine according to claim 4, characterized in that the plate (6) is made from an aluminium alloy.

6. Internal-combustion engine according to any one of the preceding claims, characterized in that a gasket (6b) of heat-conducting material is provided between the plate (6) and the cylinder head (1).

7. Internal-combustion engine according to claim 6, characterized in that the gasket (6b) of heat-conducting meaterial is made from an aluminium alloy.

8. Internal-combustion engine according to any one of the preceding claims, characterized in that a gasket (6a) of heat-insulating material is provided between the plate (6) and the inlet tube (2).

9. Internal-combustion engine according to claim 8, characterized in that the gasket (6a) of heat-insulating material is made from paper.

## Patentansprüche

1. Brennkraftmaschine vom Einspritztyp mit zwei oder mehr Zylindern und einem Zylinderkopf (1), die für jeden Zylinder einen Saugkanal (4) mit einem Einlaßventil (5) hat, wobei an dem Saugkanal (4) ein Saugrohr (2) mit einer Brennstoffeinspritzdüse (3) befestigt ist, wobei für jeden Saugkanal (4) ein Heizelement in wärmeleitender Verbindung mit dem Zylinderkopf (1) mittels einer zwischen dem Saugrohr (2) und dem Zylinderkopf (1) eingeklemmten Platte so montiert ist, daß jedes Heizelement in einen Saugkanal (4) ragt, wobei das Heizelement eine Wärmesenke (11, 12), daran angeordnete elektrische Widerstandsmittel (16) und Stromversorgungsmittel (14, 17, 18, 20) aufweist, dadurch gekennzeichnet, daß die Heizelemente (11 bis 16) aller Zylinder in einer gemeinsamen Platte (6) integriert sind, die zwischen den Saugrohren (2) aller Zylinder und dem Zylinderkopf (1) eingeklemmt ist, daß die elektrischen Widerstandsmittel (16) jedes Heizelements (11 bis 16) in einer Kammer (11) angeordnet sind, deren Oberseite, auf die Brennstoff durch die Einspritzdüse (3) gespritzt wird, einen Teil der Wärmesenke bildet, und daß die elektrischen Widerstandsmittel (16) aller Heizelemente durch isolierte Stromleiter (17, 18), die in die gemeinsame Platte (6) eingebettet sind, mit einem einzigen Anschlußstift (20) verbunden sind.

2. Brennkraftmaschine nach Anspruch 1, dadurch gekennzeichnet, daß jedes Heizelement (11 bis 16) eine mit der Kammer (11) verbundene, zylindrisch gekrümmte Wand (12) aufweist, die mit der Platte (6) durch Materialbrücken (10) verbunden ist und einen Teil der Wärmesenke bildet.

3. Brennkraftmaschine nach einem der vorhergehenden Ansprüche, dadurch gekennzeichnet, daß die elektrischen Widerstandsmittel (16) Pillen aus PTC-Material sind.

4. Brennkraftmaschine nach einem der vorhergehenden Ansprüche, dadurch gekennzeichnet, daß die Platte (6) aus einem Material mit guter Wärmeleitfähigkeit besteht.

5. Brennkraftmaschine nach Anspruch 4, dadurch gekennzeichnet, daß die Platte (6) aus einer Aluminiumlegierung besteht.

6. Brennkraftmaschine nach einem der vorhergehenden Ansprüche, dadurch gekennzeichnet, daß eine Dichtung (6b) aus wärmeleitendem Material zwischen der Platte (6) und dem Zylinderkopf (1) vorgesehen ist.

7. Brennkraftmaschine nach Anspruch 6, dadurch gekennzeichnet, daß die Dichtung (6b) aus wärmeleitendem Material aus einer Aluminiumlegierung besteht.

8. Brennkraftmaschine nach einem der vorhergehenden Ansprüche, dadurch gekennzeichnet, daß eine Dichtung (6a) aus wärmeisolierendem Material zwischen der Platte (6) und dem Saugrohr (2) vorgesehen ist.

9. Brennkraftmaschine nach Anspruch 8, dadurch gekennzeichnet, daß die Dichtung (6a) aus wärmeisolierendem Material aus Papier besteht.

## Revendications

1. Moteur à combustion interne du type à injection, comportant au moins deux cylindres et une culasse (1) comportant, pour chaque cylindre, un conduit d'admission (4) muni d'une soupape d'admission (5), une tubulure d'admission (2) avec un injecteur de carburant (3) étant fixée sur ledit conduit d'admission, un élément chauffant pour chaque conduit d'admission (4) étant fixé sur la culasse (1) de manière à transmettre la chaleur au moyen d'une plaque qui est serrée entre la tubulure d'admission (2) et la culasse (1) de façon que chaque élément chauffant s'étende dans un conduit d'admission (4), l'élément chauffant comportant un puits de chaleur (11, 12), des moyens de résistance électrique (16) disposés sur l'élément chauffant, et des moyens d'alimentation en courant (14, 17, 18, 20), caractérisé en ce que les éléments chauffants (11 à 16) de tous les cylindres sont intégrés dans une plaque commune (6) qui est serrée entre les tubulures d'admission (2) de tous les cylindres et la culasse (1), en ce que les moyens de résistance électrique (16) de chaque élément chauffant (11 à 16) sont agencés dans une chambre (11) dont la face supérieure, sur laquelle le carburant est vaporisé par l'injecteur (3), faisant partie du puits de chaleur, et en ce que les moyens de résistance électrique (16) de tous les éléments chauffants sont reliés à une borne de raccordement unique (20) par l'intermédiaire de conducteurs électriques (17, 18) noyés dans la plaque commune (6).

2. Moteur à combustion interne selon la revendication 1, caractérisé en ce que chaque élément chauffant (11 à 16) comporte une paroi incurvée cylindrique (12) reliée à la chambre (11), la paroi incurvée cylindrique (12) étant reliée à la plaque (6) au moyen de ponts de matière (10) et faisant partie du puits de chaleur.

3. Moteur à combustion interne selon l'une quelconque des revendications précédentes, caractérisé en ce que les moyens de résistance électrique (16) sont des tablettes de matériau CTP.

4. Moteur à combustion interne selon l'une quelconque des revendications précédentes, caractérisé en ce que la plaque (6) est réalisée en un matériau possédant une bonne conductivité thermique.

5. Moteur à combustion interne selon la revendication 4, caractérisé en ce que la plaque (6) est réalisée en alliage d'aluminium.

6. Moteur à combustion interne selon l'une quelconque des revendications précédentes, caractérisé en ce qu'un joint (6b) en matériau conducteur de la chaleur est prévu entre la plaque (6) et la culasse (1).

7. Moteur à combustion interne selon la revendication 6, caractérisé en ce que le joint (6b) en matériau conducteur de la chaleur est réalisé en alliage d'aluminium.

8. Moteur à combustion interne selon l'une quelconque des revendications précédentes, caractérisé en ce qu'un joint (6a) en matériau conducteur de la chaleur est prévu entre la plaque (6) et la tubulure d'admission (2).

9. Moteur selon la revendication 8, caractérisé en ce que le joint (6a) en matériau conducteur de la chaleur est réalisé en papier.
